Europäisches Patentamt

European Patent Office

Office européen des brevets

(19)

(11) Publication number: **0 449 341 A1**

# (12) EUROPEAN PATENT APPLICATION

(21) Application number: **91200349.8**

(22) Date of filing: **19.02.91**

(51) Int. Cl.⁵: **B60F 3/00, B60B 35/10**

(30) Priority: **26.03.90 IT 5293290 U**
**20.07.90 IT 6757090**

(43) Date of publication of application:
**02.10.91 Bulletin 91/40**

(84) Designated Contracting States:
**AT CH DE ES FR GB GR IT LI LU SE**

(71) Applicant: **G.P.S. S.P.A.**
**Strada Bertola Poligono 15**
**I-10040 Lombardore (Turin)(IT)**

(72) Inventor: **Bellezza, Paolo**
**Via Fatebenefratelli, 48**
**I-10077 San Maurizio Canavese, (Turin)(IT)**
Inventor: **Bellezza, Giorgio**
**Via Fatebenefratelli, 48**
**I-10077 San Maurizio Canavese, (Turin)(IT)**
Inventor: **Bellezza, Silvia**
**Via Fatebenefratelli, 48**
**I-10077 San Maurizio Canavese, (Turin)(IT)**

(74) Representative: **de Blasio, Francesco,**
**Dipl.-Ing.**
**Cabinet SIMONI DE BLASIO Via XX**
**Settembre, 62**
**I-10121 Torino(IT)**

(54) **Two-module, amphibious, fixed or variable track motor vehicle with two or more axles.**

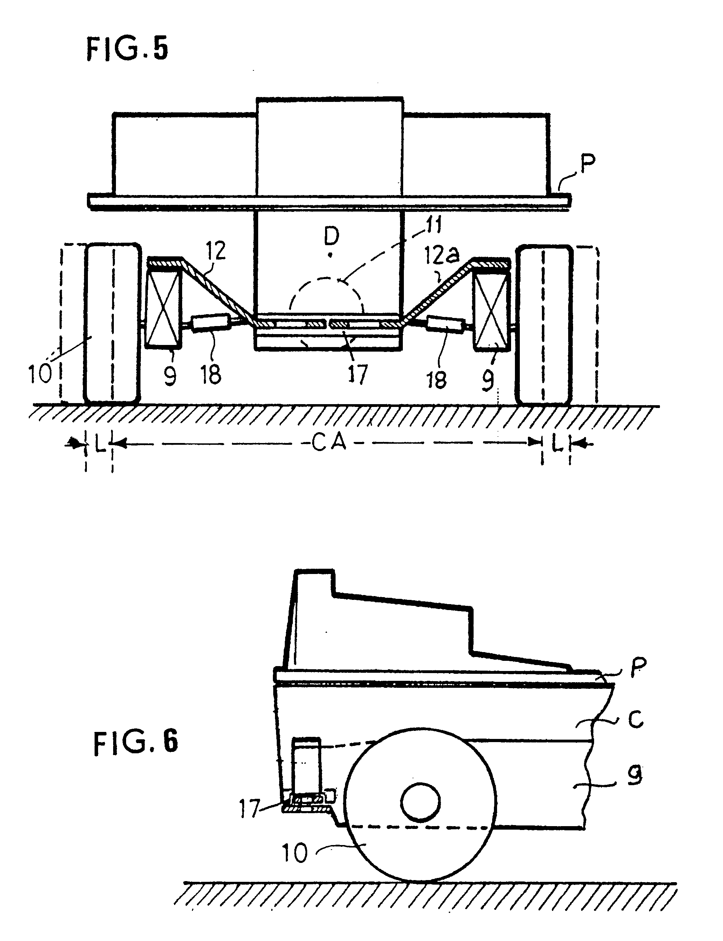

(57) Two-module, amphibious motor vehicle with two or more axles comprising, for each module, a central body, fixed to a base for a detachable, water-tight cabin, its lower part being connected to suspensions comprising transverse springs (12), whose outside and opposite ends are fixed to pairs of side members (9) of the vehicle. Alternatively, each spring is made up of two aligned half-springs slidably mounted in suitable guides; said half-springs can be blocked in their seat, in a desired position within prefixed limits, in order to vary the track of the wheel sets of each module (Figure 5).

## FIG.5

The subject of the present patent application is a two-module, amphibious vehicle which can run over any ground, with tyred wheels and having two, three or more axles.

The specific characteristics of the motor vehicle according to the invention derive from its mechanical structure which comprises: a module provided with an endothermic engine, a connecting joint between the two modules, provided with four degrees of freedom, including, within prefixed limits, the torsional movement of the joint allowing the variations in direction of the entire vehicle even where the planarity of the two modules in movement is considerably different and corresponding axles associated to single or twin tyred wheels. Each of the two modules comprises a base supporting a cabin, with water-tight doors, suitably equipped for the transport of passengers and/or various materials, fitted with devices and means suitable for satisfying the needs arising from the various uses to which the modules are put.

In one form of embodiment, the motor vehicle is further characterised by the fact that all the axles of both the modules and their relative spring suspensions have a variable track, within prefixed limits. In another form of embodiment the motor vehicle has a fixed track, as described below with reference to the schematic, illustrative drawings, on a variable scale, attached for greater clarity, in which:

- Figure 1 is a side view of the vehicle according to the invention;

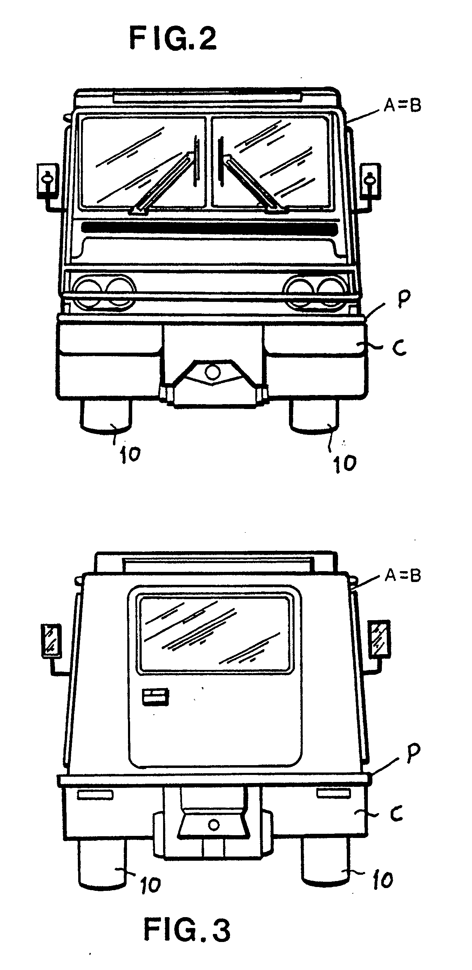

- Figures 2 and 3 illustrate respectively the front view and the rear view of the vehicle according to the invention;
- Figure 4 is a side view of only the chassis of the first module without the cabin;
- Figure 5 is a front view of only the chassis as in Figure 4, with a partial vertical section of the attachment of the front spring;
- Figure 6 is a side view of the front part of the module showing the transverse section of the attachment of the same front sprint;
- Figures 7, in partial transverse section, and 8 in a side view, illustrate the attachment of the rear spring;
- Figure 9 is an axonometric view of the juxtaposed ends of a pair of variable track springs and relative slidable means in a transverse direction with respect to the longitudinal axis of the vehicle;
- Figure 10 illustrates one of the possible mechanical embodiments which allow for the track variations on each module;
- Figures 11 and 12 are respectively front and rear views of a chassis of the vehicle constructed with a fixed track, according to a structural variant of both the modules,

- Figure 13 is a plan illustrating the transmission of motion from the engine to the wheels of the two modules;
- Figures 14 and 15 illustrate the asymmetric arrangement of respectively the rear and front springs of the modules;
- Figure 16 is a diagram of a structural variant of the suspensions according to which the springs are flat-shaped;
- Figures 17 and 18 are respectively side and front schematic views of another variant having independent wheels.

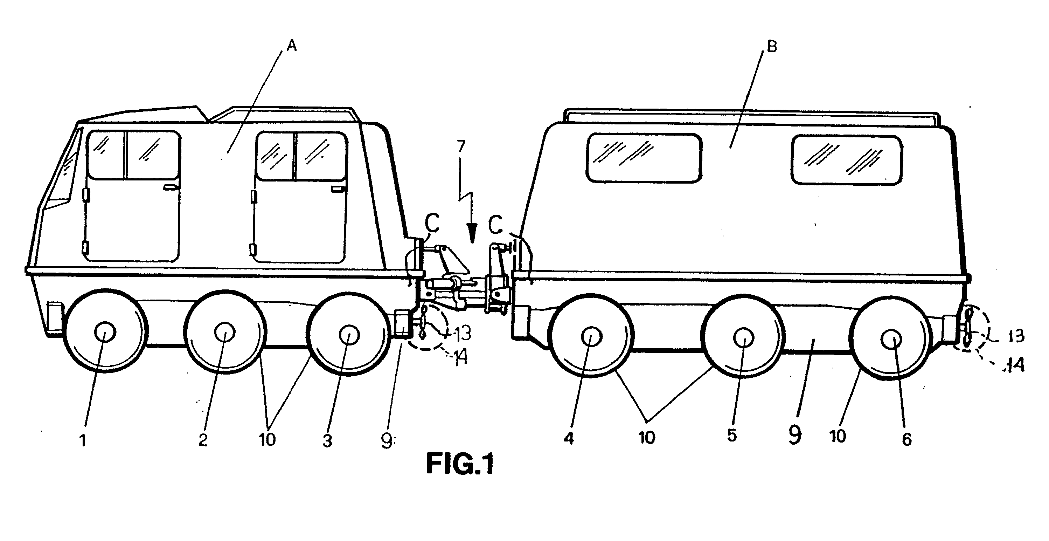

With reference to the drawings, in Figure 1 the motor vehicle comprises two modules -A,B- mutually longitudinally articulated by means of a joint 7, provided with four degrees of freedom. Said joint, connected respectively to the rear and front facing parts of the two chassis -C- of the two modules comprises a pair of opposed hydraulic cylinders, activated by the driver, in order to modify the alignment of the modules thereby allowing changes in the running direction of the entire vehicle. The cabins of the modules are mounted, detachable, on bases -P- of the chassis. The bases -P- are supported by a central boxed part -D- which contains the engine, Figures 5, 6, 7, and transmission organs. According to a form of construction of the motor vehicle, Figures 5 to 10, with respect to a reinforced bone of the part -D-, transversely slidable half-springs 12, 12a are mounted with their opposite and outside ends solidly fixed to parallel side members 9, these also transversly movable with respect to the central part -D-, together with the springs.

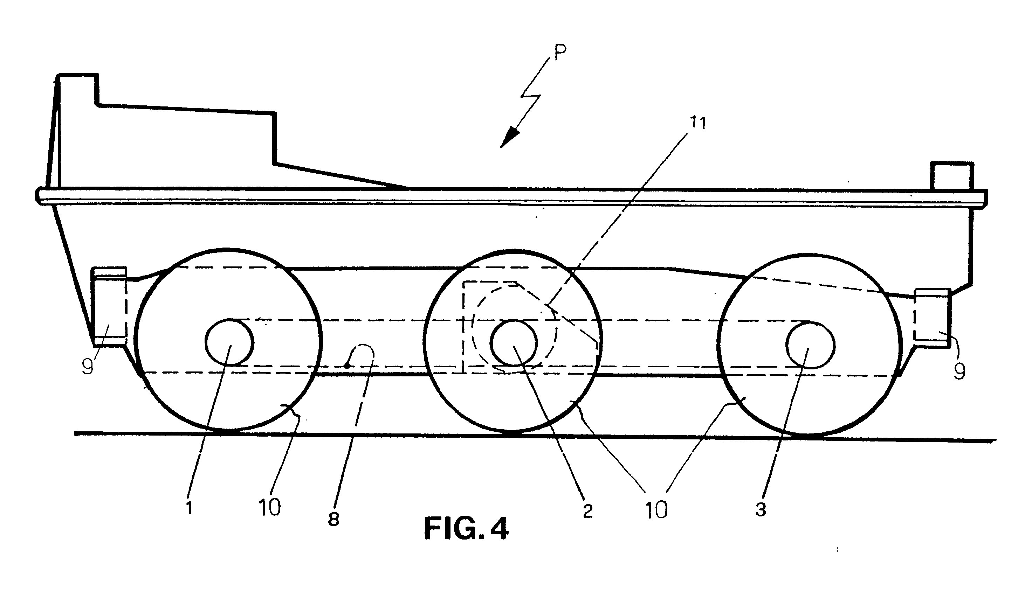

The axles 1, 2, 3, - 4, 5, 6, of each module vary in number according to the use to which the vehicle is to be put. The number of said axles, for each module, may vary from TWO to EIGHT so as to obtain a number of driving wheels from 4X4 to 16X16. Each axle is associated to a pair of low pressure, pneumatic wheels 10. Each module is provided with at least one pair of driving wheels, while the other pairs of wheels may be driving or loose. Both the modules are provided with a differential 11, Figures 4, 5, 7, 11, 12. In figure 1, reference number 13 indicates driving propellers which are set in motion when the vehicle crosses water. Reference number 14 indicates the protective cages that shield said propellers. Both the modules are provided with air conditioning plant inside the cabins -A,B-.

The driving wheels are set in motion by mechanical means and by the differentials. The driving wheels are connected, when the wheels are not directly set in motion by the engine, by means of universale joints, chains or belts for toothed wheels; said transmission means are schematically indicated by reference number 8 in Figure 4.

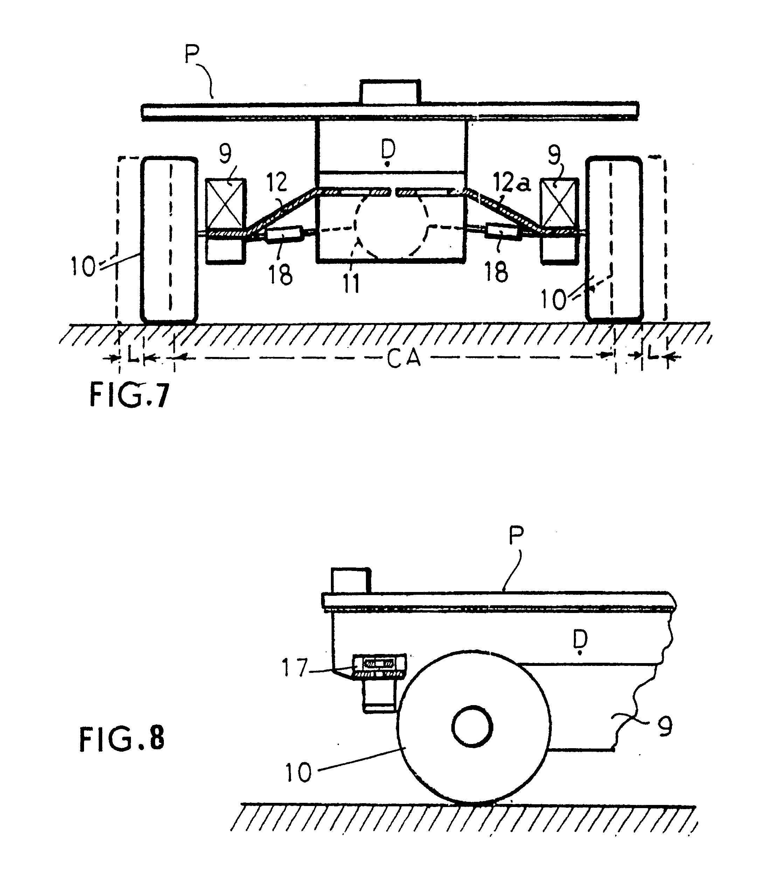

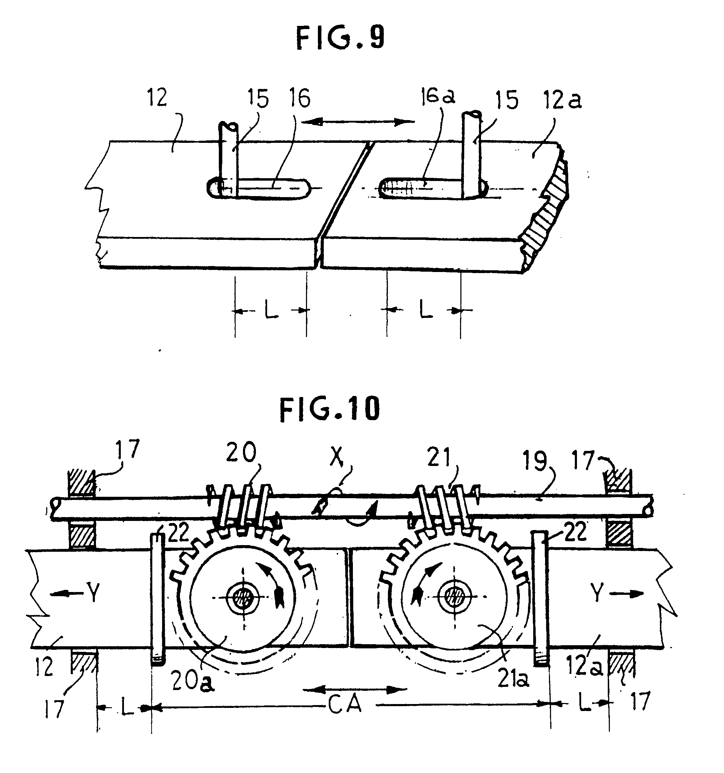

The side members 9, Figures 1, 5, 7, 8, of each module support the corresponding unit by means of half-springs 12, 12a slidably transversely fixed in guides 17, Figures 6, 7, 8, supported by the central part -D-. Suitable sliding and stopping means are provided for guiding and blocking the half-springs in the prefixed wheel-base position. An example of embodiment of these means, indicated with reference number 15 in Figure 9, are constituted by strong metal pins engaged in holes 16 made in the facing ends of each pair of half-springs 12, 12a. Both the half-springs can be blocked in any position comprised between the minimum and maximum wheel-base -CA- allowable. The longitudinal extension of each hole 16 substantially corresponds to half the width of the maximum wheel-base set for each pair of wheels 10; in the example illustrated in Figure 9, said width corresponds to: - Lx2 - where -L- is the longitudinal width of each hole 16. The variations of the track -CA-, Figures 5, 7, of the corresponding wheels, if these are driving wheels, are permitted by the presence of sleeves 18, Figure 5 and 7, which engage the facing and longitudinally grooved ends of each axle shaft in two parts; stopping means are provided for blocking the mobile parts in the desired intermediate positions. Such means, for example, are to be found on the sleeves 18, in order to allow for the variations of the length of the axle shafts within prefixed limits, corresponding to the limits of variability of the track.

As illustrated in Figure 10, a control mechanism for the variations of the track -CA- of each pair of wheels can advantageously comprise a shaft 19, rotatably supported in fixed supports 17, provided with two endless screws 20, 21, always in connection with corresponding helicoidal wheels 20a, 21a, rotatably hinged with respect to the ends 12, 12a of the half-springs of each pair of wheels 10. Starting from the position illustrated by continuous lines in Figures 5, 7, 10, and forcing a rotating movement, indicated by the arrow -X-, on the shaft 19, the helicoidal wheels 20a, 21a associated to the ends 12, 12a of the half-springs, transmit a linear movement of reciprocal distancing to the latter in the direction as indicated by the arrows -Y-; the movement, in the two directions, has a maximum width equal to -2L-.

The track -CA- of each pair of wheels, whether they are or are not driving wheels, can therefore be varied within the limits defined by:

CA = + or - 2L.

In the example illustrated the pair of stops 22, fixed to the ends 12, 12a of the half-springs, Figure 10, interfere against the fixed guides 17, fixing the limits and defining the maximum variation established by the track -CA-.

The possibility of varying the track of both the modules of the motor vehicle increases its versatility and its possibility for use for a plurality of necessities dictated by civilian purposes such as agricultural work, rescue work in inaccessible areas, in water and/or for any other necessity arising for which traditional vehicles cannot be used.

The angular activation of the shaft is preferably obtained by means of suitable electromechanical organs, controlled by programmable electronic means as well as manually by the use of suitable cranks and corresponding means of mutual engagement to be found on each shaft 19 and relative manual control organ.

The device for varying, within prefixed limits, the track of a motor vehicle is not limited to the example described and illustrated; in fact it can be advantageously applied also to single motor vehicles such as a single module provided with an engine, separated from the trailer module, as well as to motor vehicles in general, such as motorcars, heavy motor vehicles, as long as they are suitably built and destined to specific uses.

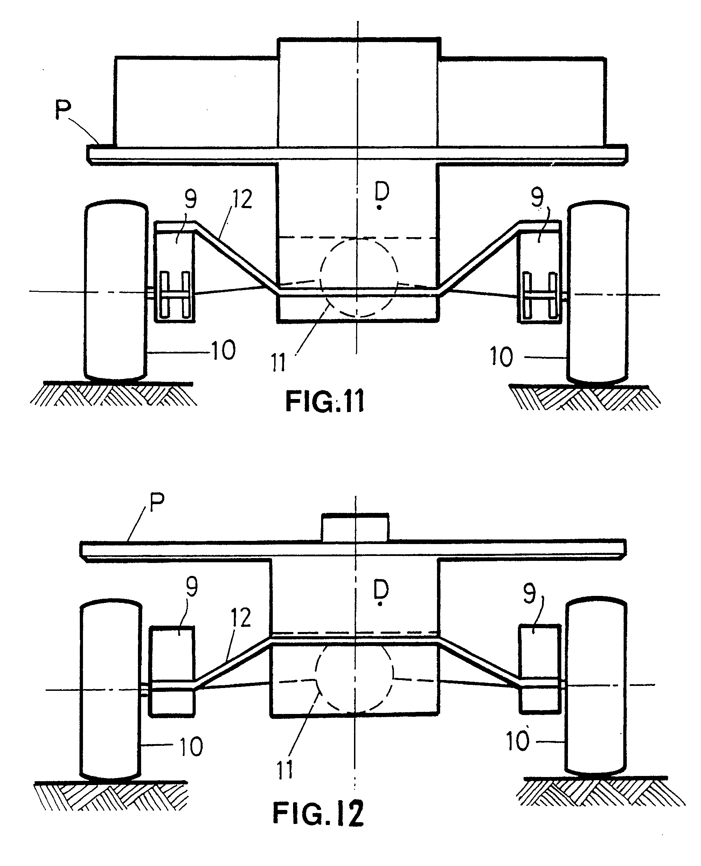

As illustrated in Figures 11 to 18, according to a variant, without deviating from the other general characteristics of the two-module motor vehicle, both the modules, for specific needs, are provided with springs and wheels having a fixed track.

In Figures 11, 12 respectively, the front and rear wheel sets of a module are schematically illustrated. In this case the springs 12 are alternatively arranged in an asymmetric way. Experiments have demonstrated that with such an arrangement the distribution of the loads and the compensation of the off-the-road roughness is more efficient.

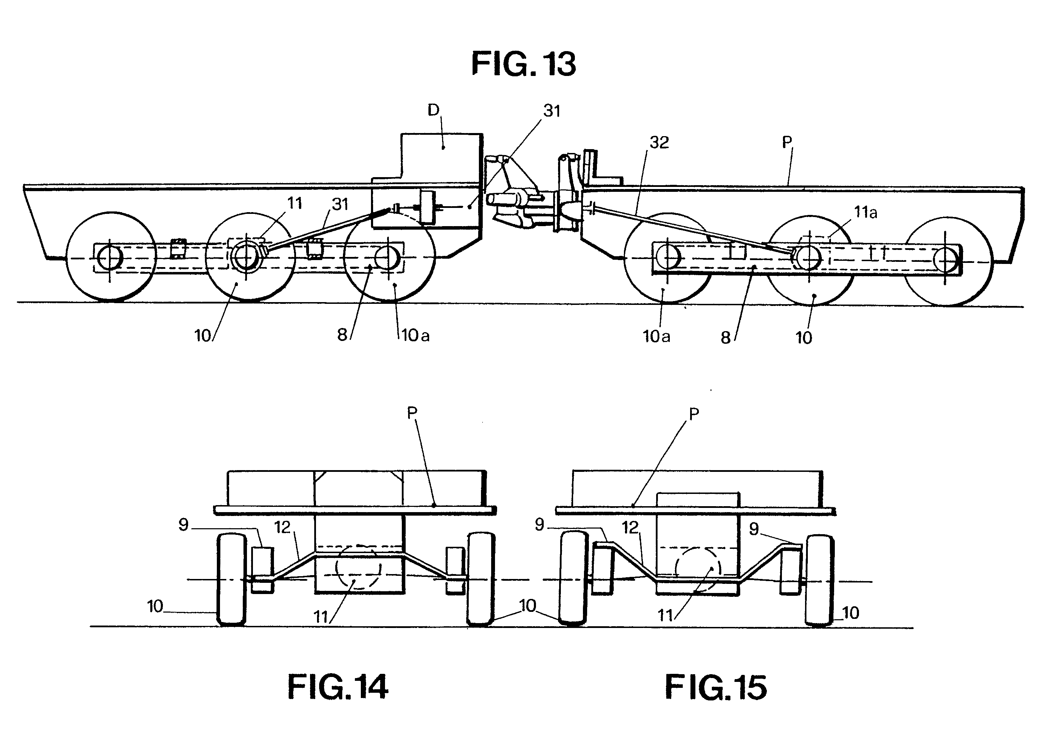

In Figures 13, 14, 15, without deviating from the asymmetric arrangement of the springs 12, the shaft 30 transmits motion from the engine -D- to the differential 11 of the front module while the shafts 31, 32 transmit motion to the differential 11a of the rear module. The driving wheels 10, activated by the respective differentials, transmit motion to the wheels 10a by means of chains or toothed belts 8.

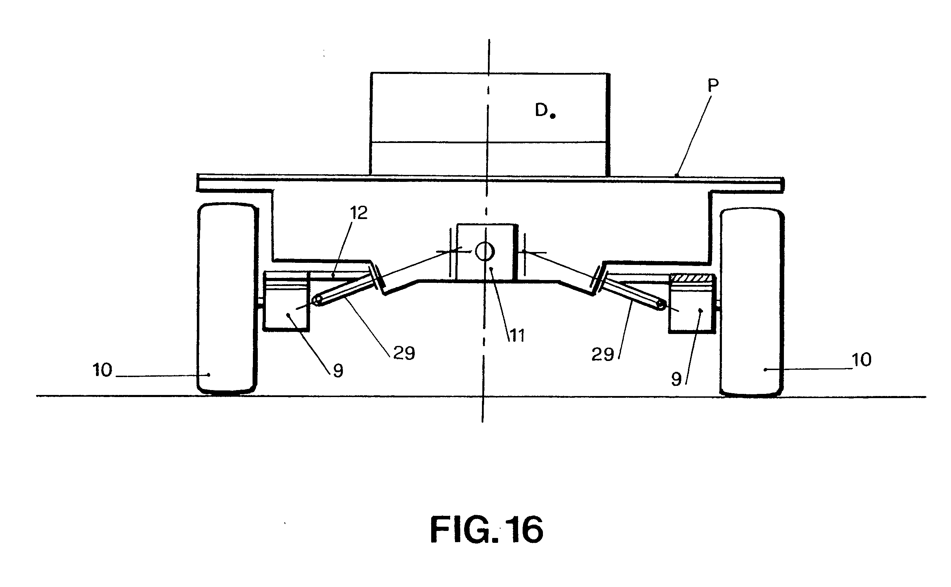

With reference to Figure 16 the wheels 10 are independent. The axle shafts are indicated by reference number number 29. The side members 9a are fixed to flat springs 12a. In this embodiment the side members are of a reduced size, particularly as regards height.

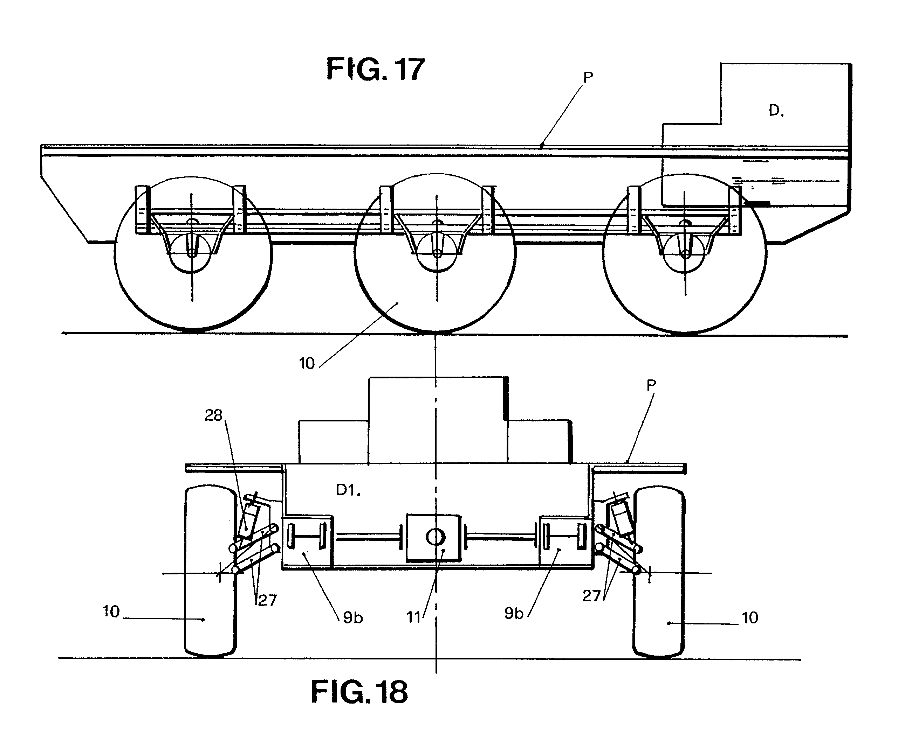

In, Figures 17, 18 another version of suspension is illustrated, according to which the wheels 10 are articulated with respect to the part -D1- which includes the side members 9b. Oscillating arms 27 and springs 28 associated to shock absorbers are provided. This solution provides compactness to each module and increased comfort when running off-the-road.

## Claims

1. Two-module, amphibious motor vehicle, with two or more axles, provided with from 4X4 to 16X16 driving wheels, characterised by the fact that the chassis supporting each module comprises a load base (P), suitable for supporting a cabin, a pair of side members (9) and a pair of springs (12) further characterised by the fact that said vehicle has variable track (CA) within prefixed limits and is provided with a connecting joint (7) between the two modules allowing for steering with a high degree of angularity between the two modules.

2. Two-module motor vehicle according to Claim 1, characterised by the fact that the variations of the width of the track (CA), within prefixed limits, are allowed by the fact that each wheel is associated to mechanical organs (18) which can be adjusted in length. The outside end of each half-spring (12, 12a) is fixed to the corresponding side member (9) while the opposite and inside ends of the same springs are mounted transversely slidable with respect to the central part (D) of the chassis. Stopping and blocking means are provided, for each half-spring, in any position comprised within the limits -L- allowed by the prefixed variations of the track (CA).

3. Two-module motor vehicle according to Claim 1, characterised by the fact that the inside and juxtaposed ends of each pair of half-springs are provided with holes (16, 16a) engaged by fixed stops (15); means for blocking the corresponding half-spring in the desired transverse position, with respect to the longitudinal axis of the vehicle (Figure 9), are provided.

4. Two-module motor vehicle according to Claim 1, characterised by the fact that for the variations of the width of the track (CA) the juxtaposed and facing ends of the half-springs (12, 12a) are associated to helicoidal toothed wheels (20a, 21a) constantly engaged to endless screws, in principle opposite (20, 21 - Figure 10) fixed to a shaft (19); stops (22, 17) are provided for establishing the running width -L- in the two directions -Y- defining $\frac{1}{2}$ of the total width of the prefixed variation of the track (CA).

5. Two-module motor vehicle according to Claims 1 to 4, in which all the kinematic organs are controlled by means of controls connected to an electronic station which emits electric impulses adequately amplified and transmitted to electromechanical means for execution of the various functions.

6. Two-module motor vehicle according to Claim 1, and according to a variant (Figures 11 to 18) in which the springs (12) are inextensible and all the wheels are fixed track.

7. Two-module motor vehicle according to Claim 6, characterised by the fact that the springs (12) have a substantially trapezoidal profile.

8. Two-module motor vehicle according to Claims 1 and 6, and according to a further variant (Figure 16) provided with flat springs (12).

9. Two-module motor vehicle according to Claims 1 to 8 in which the wheels are provided with independent suspensions associated to springs and shock absorbers.

FIG.1

# FIG.2

# FIG.3

FIG. 4

FIG.5

FIG.6

FIG.7

FIG.8

# FIG.9

# FIG.10

FIG.11

FIG.12

FIG. 13

FIG.14          FIG.15

EP 0 449 341 A1

FIG.16

EP 0 449 341 A1

**FIG.17**

**FIG.18**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 287 298 (A.SIREN) <br> * the whole document * | 1,6 | B 60 F 3/00 <br> B 60 B 35/10 |
| Y | FR-A-2 540 794 (A.ROSSIGNOL) <br> * the whole document * | 1,6 | |
| A | FR-A-2 610 258 (P.DAVID) <br> * page 12, lines 2 - 6; figure * | 2 | |
| A | DE-B-1 146 378 (GEBR. EICHER) <br> * column 1, line 52 - column 2, line 39; figure * | 2,3 | |
| A | US-A-1 520 912 (C.SCRABIC) <br> * the whole document * | 4 | |
| A | GB-A-2 197 268 (GKN TECHNOLOGY LTD.) <br> * page 1, lines 106 - 122; figures 1, 2 * | 2,8 | |
| A | GB-A-2 202 498 (B.BOOHER) <br> * page 10, line 20 - page 11, line 3; figures 7, 8 * | 7 | |
| A | US-A-3 495 672 (I.BARR) <br> * figures 1, 2, 5-8 * | 1,9 | TECHNICAL FIELDS SEARCHED (Int. Cl.5) <br><br> B 60 F <br> B 62 D <br> B 60 B <br> B 60 G |

The present search report has been drawn up for all claims

| Place of search | Date of completion of search | Examiner |
|---|---|---|
| The Hague | 09 July 91 | CZAJKOWSKI A.R. |